# EUROPEAN PATENT APPLICATION

(11) **EP 2 537 412 A1**
(43) Date of publication of application: **26.12.2012**
(21) Application number: 12169835.1
(22) Date of filing: 29.05.2012
(51) Int. Cl.: A01G 31/04

(54) **A machine to aid in growing mushrooms**

(30) Priority: 21.06.2011 AU 2011902428
(71) Applicant: Beckhart Pty Limited, Vineyard, NSW 2765 (AU)
(72) Inventor: Zahra, Benjamin, Riverstone, New South Wales 2765 (AU)
(74) Representative: Nielsen, Leif

(57) **Abstract**

An assembly (16) to grow mushrooms. The assembly (16) includes a base (17) that supports a plurality of trays (27) that circulate about a generally central longitudinal axis. Each tray (27) has ducts (33) through which a fluid passes to heat and/or cool each tray (27).

## Description

### Technical Field

The present invention relates to horticulture and more particular but not exclusively to the growing of mushrooms.

### Background of the Invention

Mushrooms grown in buildings are arranged in trays that are vertically stacked. The environment within the building needs to be accurately controlled, which includes continuous monitoring and manipulation of the environmental conditions.

A disadvantage of known methods of growing mushrooms indoors while maintaining picking/staff working at ground level is the large building footprint required to accommodate the trays/shelves as the height of the stacks is limited. Conventional shelves (trays) that are multiple levels require access to pickers/other staff by standing on elevated platforms either attached or independent of the tray/shelf within the building. A further disadvantage is that compost (substrate) temperatures can only be manipulated by indirectly changing the growing room air conditions.

Disclosed in International Patent Publications WO2010/122183, WO2006/003645, WO2004/045273 and WO93/12644 as well as Australian Patent Application 2002226203 are machines to be employed in horticulture. In particular some of the machines disclosed consist of elaborated "ferris" wheel arrangements. A disadvantage of these devices is that they are all generally complex and do not provide an environment to enhance plant growth. In particular they are not well suited to growing mushrooms.

### Object of the Invention

The object of the present invention is to overcome or substantially ameliorate at least one of the above disadvantages.

### Summary of the Invention

There is disclosed herein an assembly for horticultural purposes, the assembly including:
a base;
a main frame supported on the base for angular movement about a generally horizontal main axis;
a plurality of sub-frames, each sub-frame being supported on the main frame for angular movement about a generally horizontal sub-frame axis, the sub-frame axes being generally parallel;
a plurality of trays supported on each sub-frame, each tray being supported for angular movement about a generally horizontal tray axis, with each tray having a centre of gravity below with respective tray axis; and
   wherein said sub-frames are angularly spaced about said main axis and the trays are angularly spaced about their respective sub-frame axis, and at least one of the trays has ducting through which a fluid passes to heat and/or cool matters supported by the tray.

Preferably the tray axes are generally parallel.

Preferably the main axis, sub-frame axes and tray axes are generally parallel.

Preferably said assembly includes motor means to drive the main frame angularly about said main frame axis.

Preferably said motor means also drives each sub-frame angularly about its respective sub-frame axis.

Preferably, the main frame and sub frame include ducting for the delivery of the fluid to its tray to heat and/or cool matters supported by the trays.

Preferably, each tray includes an inlet manifold and an outlet manifold with the ducting extending therebetween.

Preferably, the assembly further includes a device to heat and/or cool the fluid delivered to the trays, and a pump to cause circulation of the fluid between the trays and the device.

There is further disclosed herein a building and the above assembly being contained in the building, with said building having a floor supporting said base, and wherein when each sub-frame is located at its lowest position at least one of the trays is locatable at a height at which a worker standing on the floor can remove items from the tray.

Preferably said building is adapted so that said assembly can receive compost for the growing of mushrooms.

Preferably said building surrounds an interior, and said building includes environmental control means to control the environment within said building.

### Brief Description of the Drawings

A preferred form of the present invention will now be described by way of example with reference to the accompanying drawings wherein:
Figure 1 is a schematic section and elevation of a building within which mushrooms are to be grown;

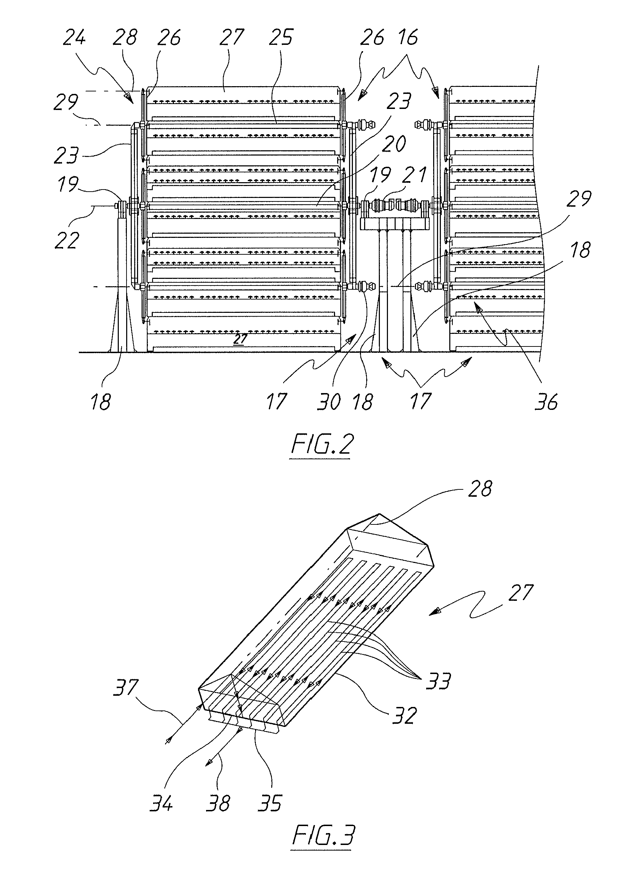

Figure 2 is a schematic side elevation of a plurality of assemblies employed in the building of Figure 1;
Figure 3 is a schematic isometric view of one of a plurality of trays employed with the assemblies of Figure 2; and

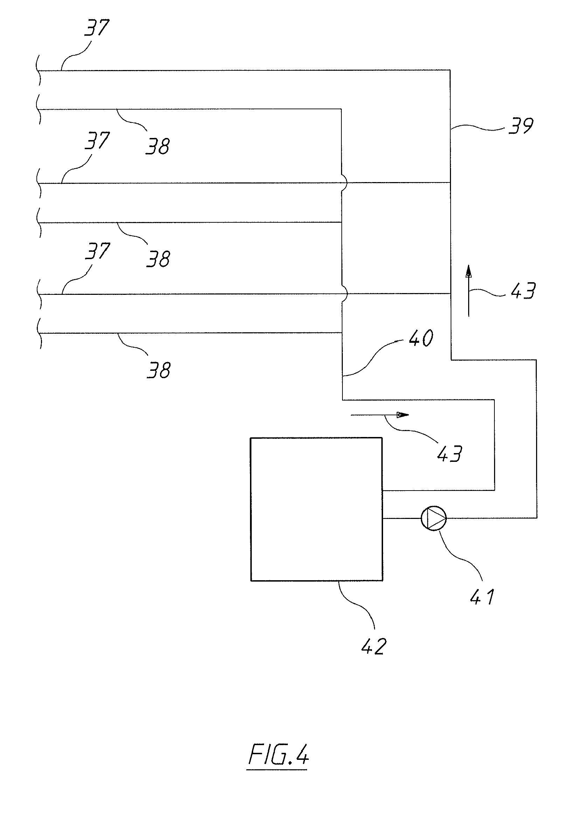

Figure 4 is a schematic diagram illustrating a fluid circuit that is part of the assemblies of Figure 2.

### Detailed Description of the Preferred Embodiment

In the accompanying drawings there is schematically depicted a building 10. The building 10 is intended to grow mushrooms. The building 10 includes a floor 11, upwardly extending walls 12 and a roof 13. The floor 11, walls 12 and roof 13 enclose a space 14 that is environment controlled for the purposes of growing mushrooms. For example the environmental control means may include ducting 15 for the purposes of air conditioning. The space 14 would also be illuminated.

Mounted and supported on the floor 11 is a plurality of assemblies 16. Typically the assemblies 16 would be located in one or more rows.

Each assembly 16 includes a base 17. Each base 17 includes a pair of horizontally spaced end frames 18 that are fixed to the floor 11. Each pair of end frames 18 has secured to it bearing assemblies 19. Between each associated pair of bearing assemblies 19 is a shaft 20. Each shaft 20 is associated with a motor 21 that causes angular movement of the associated shaft 20 about a generally horizontal main axis 22. Typically the motor 21 would drive the associated shaft 20 in one angular direction about the axis 22 at a desired velocity, with the movement possibly being intermittent. In an alternative embodiment the shaft 20 is angularly oscillated between limits.

Fixed to each shaft 20 is a plurality of spokes 23, with the spokes 23 being arranged in pairs. The shaft 20 and spokes 23 provide a main frame 36. Each pair of spokes 23 supports a sub-frame 24. Each sub-frame 24 includes a shaft 25 from which there radially extends a plurality of spokes 26. The spokes 26 are arranged in pairs, with each pair of spokes 26 supporting a respective tray 27. Each tray 27 is supported on its respective pair of spokes 26 for angular movement about a tray axis 28. Each shaft 25 is angularly movable about a respective sub-frame axis 29.

Each tray 27 is configured so as to have a centre of gravity below its respective axis 28. The axes 22, 28 and 29 are all generally horizontal. Accordingly the trays 27 are urged by gravity to a generally horizontal orientation as shown.

Also mounted on the spokes 23 are motors 30 that when operated cause angular movement of the respective shaft 25 so that each associated sub-frame 24 and its trays 27 are rotated about the respective axis 29. In an alternative embodiment the sub-frames would be angularly oscillated between limits.

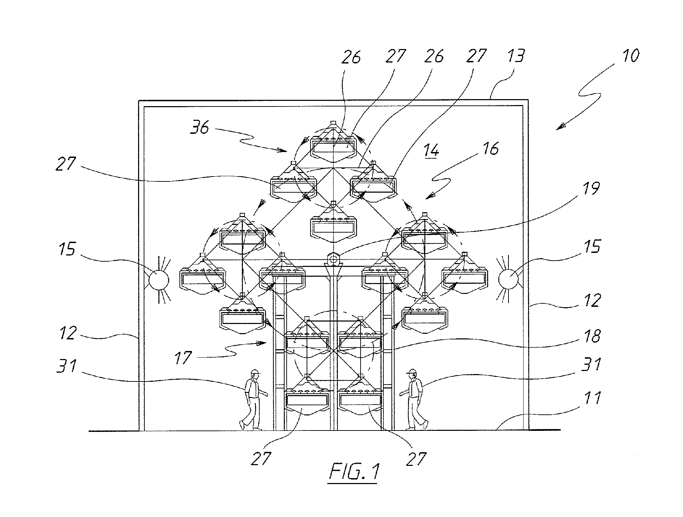

As best seen in Figure 1, the trays 27 can be located so they are accessible by workmen 31 standing on the floor 11.

Each tray 27 receive compost for the purposes of growing mushrooms. However each tray 27 includes a floor 32 that would be provided with ducts 33 having an inlet manifold 34 and an outlet manifold 35 between which a fluid such as water flows. The ducts 33 may be formed in the floor 32 or provided by a membrane supported on the floor 32. The water passing along the ducts 33 heats or cools the compost supported in the trays 27. As the fluid passing through the duct 33 is for temperature control, at least a substantially, preferably all the fluid entering the inlet manifold 34 leaves via the manifold 35. That is the fluid is retained in the ducts 33 and not distributed from the ducts 33 to the trays.

The end frames 18, shafts 20 and 25, and spokes 23 and 26 would have ducting communicating with the inlet manifold 34 and outlet manifold 35 to duct water to and from the manifolds 34. Each of the manifolds 34 receives fluid via an inlet pipe 37. The fluid is taken from each of the outlet manifolds 35 by an outlet pipe 38. The pipes 37 and 38 extend through the spokes 23 and 26 and eventually join pipes 39 and 40 extending from the base 39 to a device 42 that heats and/or cools the fluid passing therethrough. A pump 41 causes the fluid to circulate in the direction 43 through an essentially closed loop. That is, the fluid is retained within the ducting and pipes and not delivered to the trays 27. The pipe 39 receives the fluid under pressure from the pump 41 that takes the fluid from the device 42, and delivers the fluid (water) to the inlet pipes 37. The pipe 40 takes the fluid from the pipes 38 and delivers it to the device 42.

The above described preferred embodiment has a number of advantages, including being able to grow a greater volume of mushrooms per square meter of floor 11. A further advantage is having the trays 27 locatable adjacent the floor 11 so that people 31 working on the floor 11 has easy access to the mushrooms for picking purposes. A still further advantage of the above described preferred embodiment is being able to directly heat or cool the compost supported by the trays 27 via the ducts 33. This advantage includes heating or cooling by direct contact with the compost which allows ideal conditions to be maintained at the mushroom surface while influencing compost temperature independent of room conditions (temperature). This can aid in reducing energy requirements. A still further advantage is that by movement of the trays 27 through the space 14 assists in achieving a more uniform and higher yield crop with favourable quality attributes.

## Claims

1. An assembly 16 for horticultural purposes, the assembly 16 including:
a base 17;
a main frame 36 supported on the base 17 for angular movement about a generally horizontal main axis 22;
a plurality of sub-frames 24, each sub-frame 24 being supported on the main frame 36 for angular movement about a generally horizontal sub-frame axis 29, the sub-frame axes 29 being generally parallel;
a plurality of trays 27 supported on each sub-frame 24, each tray 27 being supported for angular movement about a generally horizontal tray axis 28, with each tray 27 having a centre of gravity below with respective tray axis 28; and
wherein said sub-frames 24 are angularly spaced about said main axis 22 and the trays 27 are angularly spaced about their respective sub-frame axis 29, and at least one of the trays 23 has ducting 33 through which a fluid passes to heat and/or cool matters supported by the tray 27.

2. The assembly 16 of claim 1, wherein the tray axes 28 are generally parallel.

3. The assembly 16 of claim 1, wherein the main axis 22, sub-frame axes 29 and tray axes 28 are generally parallel.

4. The assembly 16 of claim 1, further includes motor means 21 to drive the main frame 16 angularly about said main frame axis 22.

5. The assembly 16 of claim 4, wherein said motor means 21 also drives each sub-frame 24 angularly about its respective sub-frame axis 29.

6. The assembly 16 of claim 1, wherein the main frame 36 and each sub frame 24 include ducting 37, 38 for the delivery of the fluid to its tray 27 to heat and/or cool matters supported by the trays 27.

7. The assembly 16 of claim 6, wherein each tray 27 includes an inlet manifold and an outlet manifold 35 with the ducting extending therebetween.

8. The assembly 16 of claim 7, further including a device 42 to heat and/or cool the fluid delivered to the trays 27, and a pump 41 to cause circulation of the fluid between the trays 27 and the device 42.

9. In combination a building 10 and the assembly 16 of claim 1, wherein the assembly 16 is contained in the building 10, with said building having a floor 11 supporting said base 17, and wherein when each sub-frame 24 is located at its lowest position at least one of the trays 27 is locatable at a height at which a worker standing on the floor 11 can remove items from the tray 27.

10. The combination of claim 9, wherein said building 10 is adapted so that said assembly 16 can receive compost for the growing of mushrooms.

11. The combination of claim 10, wherein said building 10 surrounds an interior, and said building 10 includes environmental control means to control the environment within said building 10.
